# EUROPEAN PATENT APPLICATION

(11) **EP 4 597 471 A1**
(43) Date of publication of application: **06.08.2025**
(21) Application number: 23771929.9
(22) Date of filing: 18.08.2023
(51) Int. Cl.: G08G 1/16, B60W 30/16, B60W 30/18, B62J 45/415

(54) **CONTROL DEVICE AND CONTROL METHOD**

(30) Priority: 30.09.2022 JP 2022157203
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/058278
(87) International publication number: WO 2024/069270

(57) **Abstract**

The invention obtains a controller and a control method capable of appropriately adjusting a positional relationship between a lean vehicle and a preceding vehicle.

In a controller (20) and the control method according to the invention, an execution section of the controller (20) executes positional relationship adjustment operation to adjust a positional relationship between a lean vehicle (1) and a preceding vehicle located in front of the lean vehicle (1) to a target positional relationship. Furthermore, a determination section of the controller (20) determines whether the lean vehicle (1) is cornering. The execution section changes the target positional relationship according to whether the lean vehicle (1) is cornering.

## Description

### Technical Field

The invention relates to a controller and a control method capable of appropriately adjusting a positional relationship between a lean vehicle and a preceding vehicle.

### Background Art

As a conventional technique related to a lean vehicle such as a motorcycle, a technique of assisting with driving by a rider has been available. For example, a driver-assistance system is disclosed in PTL 1. The driver assistance system warns the rider of the motorcycle that the motorcycle inappropriately approaches an obstacle on the basis of information detected by a sensor device that detects the obstacle present in a travel direction or substantially in the travel direction.

### Citation List

### Patent Literature

PTL 1: JP2009-116882A

### Summary of Invention

### Technical Problem

By the way, as a technique of assisting with driving, positional relationship adjustment operation is available. In the positional relationship adjustment operation, a positional relationship between a vehicle and a preceding vehicle that is located in front of the vehicle is adjusted to a target positional relationship. It is considered to apply the positional relationship adjustment operation to the lean vehicle. The lean vehicle has a much smaller vehicle body size than other vehicles (for example, a four-wheeled automobile and the like). In other words, due to a high degree of freedom in a travel position of the lean vehicle, the positional relationship between the lean vehicle and the preceding vehicle is likely to be changed. Thus, there is a substantial need for appropriate adjustment of the positional relationship between the lean vehicle and the preceding vehicle.

The invention has been made with the above-described problem as the background and therefore obtains a controller and a control method capable of appropriately adjusting a positional relationship between a lean vehicle and a preceding vehicle.

### Solution to Problem

A controller according to the invention is a controller that controls behavior of a lean vehicle, includes: an execution section that executes positional relationship adjustment operation to adjust a positional relationship between the lean vehicle and a preceding vehicle located in front of the lean vehicle to a target positional relationship, and further includes: a determination section that determines whether the lean vehicle is cornering. The execution section changes the target positional relationship according to whether the lean vehicle is cornering.

A control method according to the invention is a control method for controlling behavior of a lean vehicle, includes: executing positional relationship adjustment operation by an execution section of a controller, the positional relationship adjustment operation being operation to adjust a positional relationship between the lean vehicle and a preceding vehicle located in front of the lean vehicle to a target positional relationship, and further includes: determining whether the lean vehicle is cornering by a determination section of the controller. The execution section changes the target positional relationship according to whether the lean vehicle is cornering.

### Advantageous Effects of Invention

In the controller and the control method according to the invention, the execution section of the controller executes the positional relationship adjustment operation to adjust the positional relationship between the lean vehicle and the preceding vehicle located in front of the lean vehicle to the target positional relationship. Furthermore, the determination section of the controller determines whether the lean vehicle is cornering. The execution section changes the target positional relationship according to whether the lean vehicle is cornering. In this way, in the case where the lean vehicle is cornering, it is possible to adjust the positional relationship between the lean vehicle and the preceding vehicle by taking a fact that the lean vehicle is cornering into consideration. Therefore, it is possible to appropriately adjust the positional relationship between the lean vehicle and the preceding vehicle.

### Brief Description of Drawings

Fig. 1 is a schematic view illustrating an outline configuration of a lean vehicle according to an embodiment of the invention.
Fig. 2 is a block diagram illustrating an exemplary functional configuration of a controller according to the embodiment of the invention.
Fig. 3 is a view illustrating a situation where a lean vehicle according to the embodiment of the invention travels behind another vehicle.
Fig. 4 is a flowchart illustrating an example of a first processing procedure that is executed by the controller according to the embodiment of the invention.
Fig. 5 is a view illustrating a situation where the lean vehicle according to the embodiment of the invention is cornering.
Fig. 6 is a view illustrating a situation where a group including the lean vehicle according to the embodiment of the invention travels in a group.
Fig. 7 is a flowchart illustrating an example of a second processing procedure that is executed by the controller according to the embodiment of the invention.
Fig. 8 is a view illustrating a situation where the lean vehicle according to the embodiment of the invention is cornering while traveling in the group.

### Description of Embodiments

A description will hereinafter be made on a controller and a control method according to the invention with reference to the drawings.

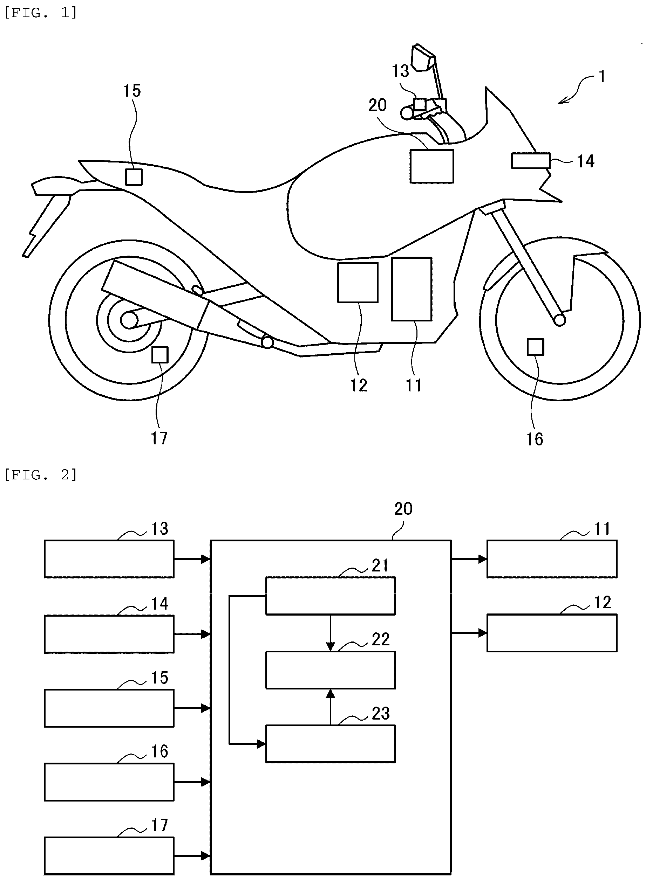

The following description will be made on the controller that is used for a two-wheeled motorcycle (see a lean vehicle 1 in Fig. 1). However, a vehicle as a control target of the controller according to the invention only needs to be a lean vehicle, and may be a lean vehicle other than the two-wheeled motorcycle. The lean vehicle means a vehicle, a vehicle body of which is tilted to the right when turning in a right direction and is tilted to the left when turning in a left direction. Examples of the lean vehicle are motorcycles (the two-wheeled motor vehicle and a three-wheeled motor vehicle) and a bicycle. The motorcycles include a vehicle having an engine as a power source, a vehicle having an electric motor as a power source, and the like. Examples of the motorcycles are a motorbike, a scooter, and an electric scooter. The bicycle means a vehicle capable of traveling forward on a road by a depression force applied to pedals by a rider. Examples of the bicycle are an electrically-assisted bicycle and an electric bicycle.

In addition, a description will hereinafter be made on a case where the engine (more specifically, an engine 11 in Fig. 1, which will be described below) is mounted as a drive source that can output power for driving a wheel. However, as the drive source, a drive source other than the engine (for example, an electric motor) may be mounted, or plural drive sources may be mounted.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Lean Vehicle>

A description will be made on a configuration of the lean vehicle 1 according to an embodiment of the invention with reference to Fig. 1 and Fig. 2.

Fig. 1 is a schematic view illustrating an outline configuration of the lean vehicle 1. Fig. 2 is a block diagram illustrating an exemplary functional configuration of a controller 20.

The lean vehicle 1 is a two-wheeled motorcycle that corresponds to an example of the lean vehicle according to the invention. As illustrated in Fig. 1, the lean vehicle 1 includes the engine 11, a hydraulic pressure control unit 12, an input device 13, a surrounding environment sensor 14, an inertial measurement unit (IMU) 15, a front-wheel rotational frequency sensor 16, a rear-wheel rotational frequency sensor 17, and the controller (ECU) 20. In the present specification, the lean vehicle 1 will also be referred to as an own vehicle 1.

The engine 11 corresponds to an example of a drive source of the lean vehicle 1 and can output power for driving a wheel. For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening amount of the throttle valve.

The hydraulic pressure control unit 12 is a unit that has a function of controlling a braking force generated on the wheel. For example, the hydraulic pressure control unit 12 includes components (for example, a control valve and a pump) that are provided on an oil channel connecting a master cylinder and a wheel cylinder and control a brake hydraulic pressure in the wheel cylinder. The braking force generated on the wheel is controlled when operation of the components in the hydraulic pressure control unit 12 is controlled. The hydraulic pressure control unit 12 may control the braking force generated on each of a front wheel and a rear wheel or may only control the braking force generated on one of the front wheel and the rear wheel.

The input device 13 accepts various operations by a rider. For example, the input device 13 is provided to a handlebar, and includes a push button and the like that are used for the rider's operation. Information on the rider's operation using the input device 13 is output to the controller 20.

The surrounding environment sensor 14 detects surrounding environment information related to environment around the lean vehicle 1. More specifically, the surrounding environment sensor 14 is provided to a front portion of the lean vehicle 1, and detects the surrounding environment information in front of the lean vehicle 1. The surrounding environment information that is detected by the surrounding environment sensor 14 is output to the controller 20.

The surrounding environment information that is detected by the surrounding environment sensor 14 may be information on a distance to or an orientation of a target object that is located around the lean vehicle 1 (for example, a relative position, a relative distance, a relative speed, relative acceleration, or the like), or may be a characteristic of the target object that is located around the lean vehicle 1 (for example, a type of the target object, a shape of the target object itself, a mark on the target object, or the like). Examples of the surrounding environment sensor 14 are a radar, a Lidar sensor, an ultrasonic sensor, and a camera.

The surrounding environment information can also be detected by a surrounding environment sensor that is mounted to another vehicle or by an infrastructure facility. In other words, the controller 20 can also acquire the surrounding environment information via wireless communication with the other vehicle or the infrastructure facility.

The IMU 15 includes a three-axis gyroscope sensor and a three-directional acceleration sensor, and detects a posture of the lean vehicle 1. The IMU 15 is provided to a trunk of the lean vehicle 1, for example. For example, the IMU 15 detects a lean angle of the lean vehicle 1 and outputs a detection result. The IMU 15 may detect another physical quantity that can substantially be converted to the lean angle of the lean vehicle 1. The lean angle corresponds to an angle representing a tilt in a rolling direction of a vehicle body (more specifically, the trunk) of the lean vehicle 1 with respect to an upper vertical direction. The IMU 15 may only include parts of the three-axis gyroscope sensor and the three-directional acceleration sensor.

The front-wheel rotational frequency sensor 16 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 16 may detect another physical quantity that can substantially be converted to the rotational frequency of the front wheel. The front-wheel rotational frequency sensor 16 is provided to the front wheel.

The rear-wheel rotational frequency sensor 17 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 17 may detect another physical quantity that can substantially be converted to the rotational frequency of the rear wheel. The rear-wheel rotational frequency sensor 17 is provided to the rear wheel.

The controller 20 controls behavior of the lean vehicle 1. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into plural units, for example.

Fig. 2 is a block diagram illustrating an exemplary functional configuration of the controller 20. As illustrated in Fig. 2, the controller 20 includes an acquisition section 21, an execution section 22, and a determination section 23, for example. In addition, the controller 20 communicates with each of the devices in the lean vehicle 1.

The acquisition section 21 acquires information from each of the devices in the lean vehicle 1, and outputs the acquired information to the execution section 22 and the determination section 23. For example, the acquisition section 21 acquires information from the input device 13, the surrounding environment sensor 14, the IMU 15, the front-wheel rotational frequency sensor 16, and the rear-wheel rotational frequency sensor 17. In the present specification, the acquisition of the information can include extraction, generation, and the like of the information.

The execution section 22 executes various types of control by controlling operation of each of the devices in the lean vehicle 1. For example, the execution section 22 controls the operation of the engine 11 and the hydraulic pressure control unit 12.

Here, the execution section 22 can execute positional relationship adjustment operation. The positional relationship adjustment operation is operation to adjust a positional relationship between the lean vehicle 1 and a preceding vehicle located in front of the lean vehicle 1 to a target positional relationship.

Hereinafter, a description will be made on an example in which adaptive cruise control is executed as the positional relationship adjustment operation. However, the positional relationship adjustment operation only needs to be operation to adjust the positional relationship between the lean vehicle 1 and the preceding vehicle to the target positional relationship, and may be operation other than the adaptive cruise control (for example, operation that is not canceled by an accelerator operation by the rider).

The execution section 22 initiates the adaptive cruise control with the rider's operation using the input device 13 as a trigger, for example. In the adaptive cruise control, the execution section 22 automatically controls a speed of the lean vehicle 1 without relying on an accelerating/decelerating operation (that is, the accelerator operation and a brake operation) by the rider. For example, the execution section 22 can control the speed of the lean vehicle 1 on the basis of information on the speed of the lean vehicle 1 that is acquired on the basis of the rotational frequency of the front wheel and the rotational frequency of the rear wheel. The adaptive cruise control is canceled when the accelerator operation is performed by the rider.

In the adaptive cruise control, for example, a target inter-vehicle distance that is a target value of an inter-vehicle distance between the lean vehicle 1 and the preceding vehicle is set, and the execution section 22 controls the speed of the lean vehicle 1 such that the inter-vehicle distance between the lean vehicle 1 and the preceding vehicle is maintained at the target inter-vehicle distance. In other words, such a positional relationship that the inter-vehicle distance between the lean vehicle 1 and the preceding vehicle is the target inter-vehicle distance corresponds to the target positional relationship. Here, the inter-vehicle distance may mean a distance in a direction along a lane (more specifically, a travel lane of the lean vehicle 1) or may mean a straight-line distance. For example, the acquisition section 21 can acquire the inter-vehicle distance between the lean vehicle 1 and the preceding vehicle on the basis of the surrounding environment information of the lean vehicle 1, and the execution section 22 can control the speed of the lean vehicle 1 as described above on the basis of the thus-acquired inter-vehicle distance.

Hereinafter, a description will mainly be made on an example in which, in the adaptive cruise control, the speed of the lean vehicle 1 is controlled in the manner to maintain the inter-vehicle distance between the lean vehicle 1 and the preceding vehicle at the target inter-vehicle distance and the positional relationship between the lean vehicle 1 and the preceding vehicle is thereby adjusted to the target positional relationship. However, in the adaptive cruise control, for example, a target passing time difference that is a target value of a passing time difference (more specifically, a time taken for the lean vehicle 1 to pass a current location of the preceding vehicle from a current time point) may be set, and the execution section 22 may control the speed of the lean vehicle 1 such that the passing time difference is maintained to be the target passing time difference. In this case, such a positional relationship that the passing time difference is the target passing time difference corresponds to the target positional relationship. For example, the acquisition section 21 can acquire the passing time difference on the basis of the surrounding environment information of the lean vehicle 1, and the execution section 22 can control the speed of the lean vehicle 1 as described above on the basis of the thus-acquired passing time difference.

The determination section 23 makes various determinations. A determination result by the determination section 23 is output to the execution section 22 and is used for processing that is executed by the execution section 22.

### <Operation of Controller>

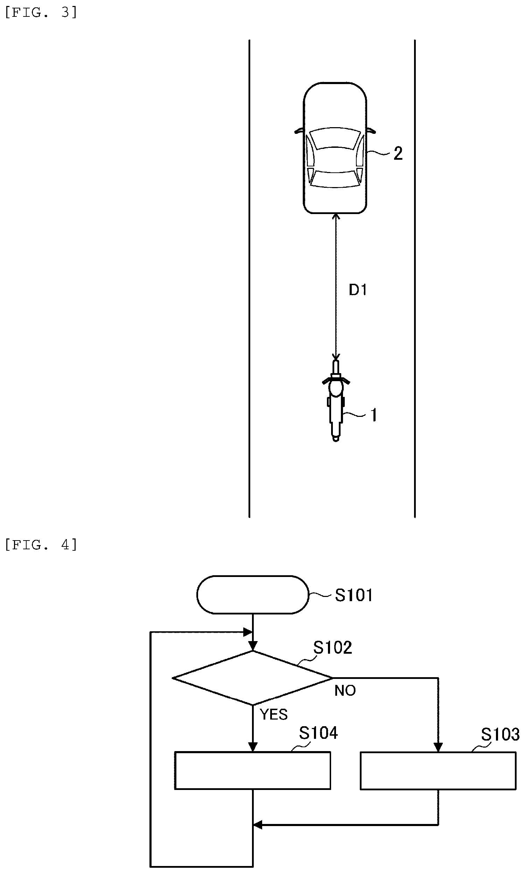

A description will be made on operation of the controller 20 according to the embodiment of the invention with reference to Fig. 3 to Fig. 8.

As described above, the execution section 22 of the controller 20 executes the positional relationship adjustment operation (for example, the adaptive cruise control). Here, the execution section 22 changes the target positional relationship in the positional relationship adjustment operation according to whether the lean vehicle 1 is cornering. In this way, as will be described below, the positional relationship between the lean vehicle 1 and the preceding vehicle is appropriately adjusted.

Hereinafter, a description will sequentially be made on first processing and second processing as processing examples that are executed by such a controller 20. The first processing and the second processing are executing during the adaptive cruise control.

First, a description will be made on the first processing with reference to Fig. 3 to Fig. 5.

Fig. 3 is a view illustrating a situation where the lean vehicle 1 travels behind another vehicle 2. As illustrated in Fig. 3, the other vehicle 2 is located in front of the lean vehicle 1. In the example illustrated in Fig. 3, the other vehicle 2 corresponds to the preceding vehicle as an adjustment target of the positional relationship in the adaptive cruise control. In the example illustrated in Fig. 3, the other vehicle 2 is the four-wheeled automobile. However, the preceding vehicle as the adjustment target of the positional relationship may be a vehicle other than the four-wheeled automobile (for example, the lean vehicle or the like).

In the example illustrated in Fig. 3, during the adaptive cruise control, the execution section 22 controls the speed of the lean vehicle 1 such that an inter-vehicle distance D1 between the lean vehicle 1 and the other vehicle 2 is maintained at the target inter-vehicle distance. In this way, the positional relationship between the lean vehicle 1 and the other vehicle 2 is adjusted to such a target positional relationship that the inter-vehicle distance D1 is the target inter-vehicle distance.

By the way, in the example illustrated in Fig. 3, the lean vehicle 1 travels straight. However, the lean vehicle 1 may also corner. When the lean vehicle 1 is cornering, the rider of the lean vehicle 1 is likely to lose sight of the other vehicle 2 located in front of the lean vehicle 1, which can easily compromise driving feeling. In addition, when the lean vehicle 1 is cornering, the other vehicle 2 located in front of the lean vehicle 1 is likely to move out of a detection range of the surrounding environment sensor 14. Such a problem is solved by the first processing.

Fig. 4 is a flowchart illustrating an example of a first processing procedure that is executed by the controller 20. Step S101 in Fig. 4 corresponds to initiation of the control flow illustrated in Fig. 4.

When the control flow illustrated in Fig. 4 is initiated, in step S102, the determination section 23 determines whether the lean vehicle 1 is cornering.

For example, the determination section 23 determines whether the lean vehicle 1 is cornering on the basis of posture information of the lean vehicle 1. The posture information is information on the posture of the lean vehicle 1. More specifically, the posture information is information on a physical quantity to which the posture of the lean vehicle 1 that varies by cornering of the lean vehicle 1 is reflected.

For example, the determination section 23 determines whether the lean vehicle 1 is cornering on the basis of lean angle information of the lean vehicle 1 as the posture information. The lean angle information is information on a lean angle of the lean vehicle 1 and can include any of various types of information such as the lean angle, another physical quantity that can substantially be converted to the lean angle, a degree of a change in the lean angle, and another physical quantity that can substantially be converted to the degree of the change in the lean angle. For example, the lean angle information can be acquired on the basis of the detection result of the IMU 15.

For example, in the case where the lean angle of the lean vehicle 1 is larger than a reference value, the determination section 23 determines that the lean vehicle 1 is cornering. In detail, in the case where the lean angle of the lean vehicle 1 exceeds the reference value, and then a state where the lean angle is larger than the reference value continues for a predetermined time, the determination section 23 may determine that the lean vehicle 1 has started cornering. Thereafter, in the case where the lean angle of the lean vehicle 1 falls below the reference value, and then the state where the lean angle is smaller than the reference value continues for a predetermined time, the determination section 23 may determine that the lean vehicle 1 has finished cornering.

The above description has been made on the example in which the lean angle information is used as the posture information. However, information other than the lean angle information may be used as the posture information.

For example, lateral acceleration information of the lean vehicle 1 may be used as the posture information. The lateral acceleration information is information on lateral acceleration of the lean vehicle 1 and can include any of various types of information such as the lateral acceleration, another physical quantity that can substantially be converted to the lateral acceleration, a degree of a change in the lateral acceleration, and another physical quantity that can substantially be converted to the degree of the change in the lateral acceleration. For example, the lateral acceleration information can be acquired on the basis of the detection result of the IMU 15.

For example, in the case where the lateral acceleration of the lean vehicle 1 is higher than a reference value, the determination section 23 determines that the lean vehicle 1 is cornering. In detail, in the case where the lateral acceleration of the lean vehicle 1 exceeds the reference value, and then a state where the lateral acceleration is higher than the reference value continues for a predetermined time, the determination section 23 may determine that the lean vehicle 1 has started cornering. Thereafter, in the case where the lateral acceleration of the lean vehicle 1 falls below the reference value, and then the state where the lateral acceleration is lower than the reference value continues for a predetermined time, the determination section 23 may determine that the lean vehicle 1 has finished cornering.

For example, yaw angular velocity information of the lean vehicle 1 may be used as the posture information. The yaw angular velocity information is information on a yaw angular velocity of the lean vehicle 1 and can include any of various types of information such as the yaw angular velocity, another physical quantity that can substantially be converted to the yaw angular velocity, a degree of a change in the yaw angular velocity, and another physical quantity that can substantially be converted to the degree of the change in the yaw angular velocity. For example, the yaw angular velocity information can be acquired on the basis of the detection result of the IMU 15.

For example, in the case where the yaw angular velocity of the lean vehicle 1 is higher than a reference value, the determination section 23 determines that the lean vehicle 1 is cornering. In detail, in the case where the yaw angular velocity of the lean vehicle 1 exceeds the reference value, and then a state where the yaw angular velocity is higher than the reference value continues for a predetermined time, the determination section 23 may determine that the lean vehicle 1 has started cornering. Thereafter, in the case where the yaw angular velocity of the lean vehicle 1 falls below the reference value, and then the state where the yaw angular velocity is lower than the reference value continues for a predetermined time, the determination section 23 may determine that the lean vehicle 1 has finished cornering.

For example, steering angle information of the lean vehicle 1 may be used as the posture information. The steering angle information is information on a steering angle of the handlebar of the lean vehicle 1 and can include any of various types of information such as the steering angle, another physical quantity that can substantially be converted to the steering angle, a degree of a change in the steering angle, and another physical quantity that can substantially be converted to the degree of the change in the steering angle. For example, the steering angle information can be acquired on the basis of a detection result of a sensor that is provided to the handlebar and detects the steering angle thereof.

For example, in the case where the steering angle of the lean vehicle 1 is larger than a reference value, the determination section 23 determines that the lean vehicle 1 is cornering. In detail, in the case where the steering angle of the lean vehicle 1 exceeds the reference value, and then a state where the steering angle is larger than the reference value continues for a predetermined time, the determination section 23 may determine that the lean vehicle 1 has started cornering. Thereafter, in the case where the steering angle of the lean vehicle 1 falls below the reference value, and then the state where the steering angle is smaller than the reference value continues for a predetermined time, the determination section 23 may determine that the lean vehicle 1 has finished cornering.

The above description has been made on the example in which it is determined whether the lean vehicle 1 is cornering on the basis of the posture information. However, the determination section 23 may determine whether the lean vehicle 1 is cornering on the basis of information other than the posture information. For example, the determination section 23 may determine whether the lean vehicle 1 is cornering on the basis of map information acquired from a navigation system and location information of the lean vehicle 1.

If it is determined that the lean vehicle 1 is not cornering (step S102/NO), the processing proceeds to step S103. In step S103, the execution section 22 sets the target inter-vehicle distance to a reference distance. For example, the reference distance is a distance that is set in advance by the rider. On the other hand, if it is determined that the lean vehicle 1 is cornering (step S102/YES), the processing proceeds to step S104. In step S104, the execution section 22 sets the target inter-vehicle distance to a shorter distance than the reference distance. After step S103 or step S104, the processing returns to step S102.

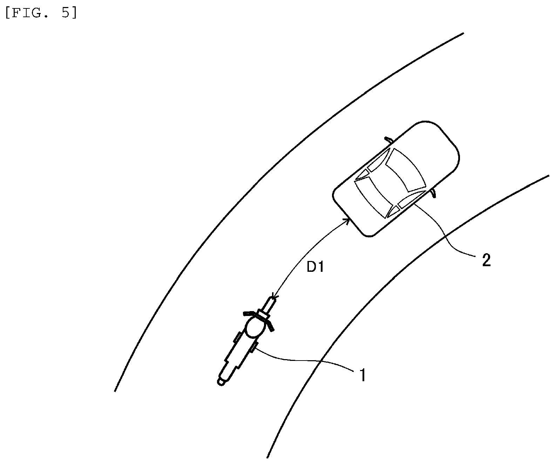

Fig. 5 is a view illustrating a situation where the lean vehicle 1 is cornering. In the first processing, in the case where the lean vehicle 1 is cornering as illustrated in Fig. 5, the execution section 22 sets the target inter-vehicle distance, which corresponds to an inter-vehicle distance D1 between the lean vehicle 1 and the other vehicle 2, to be shorter than that when the lean vehicle 1 is not cornering. In this way, in the case where the lean vehicle 1 is cornering, the inter-vehicle distance D1 between the lean vehicle 1 and the other vehicle 2 becomes shorter than that when the lean vehicle 1 is not cornering. Just as described, in the first processing, in the case where the lean vehicle 1 is cornering, the execution section 22 changes the target positional relationship with the other vehicle 2 in the manner to set the inter-vehicle distance D1 between the lean vehicle 1 and the other vehicle 2 to be shorter than that when the lean vehicle 1 is not cornering. As a result, it is possible to suppress the compromise of the driving feeling due to the loss of sight of the other vehicle 2 by the rider of the lean vehicle 1 and to suppress the other vehicle 2 from moving out of the detection range of the surrounding environment sensor 14 in the case where the lean vehicle 1 is cornering.

Here, in the case where the lean vehicle 1 is cornering, the execution section 22 may set the target passing time difference, which corresponds to the passing time difference between the lean vehicle 1 and the other vehicle 2, to be shorter than that when the lean vehicle 1 is not cornering. Also in this case, in the case where the lean vehicle 1 is cornering, the target positional relationship with the other vehicle 2 is changed in the manner to set the inter-vehicle distance D1 between the lean vehicle 1 and the other vehicle 2 to be shorter than that when the lean vehicle 1 is not cornering.

Here, a degree of a change in the target positional relationship (for example, a change amount of the target inter-vehicle distance or a change amount of the target passing time difference) between the case where the lean vehicle 1 is cornering and the case where the lean vehicle 1 is not cornering may be set in advance to be constant. However, the execution section 22 may change the degree of the change in the target positional relationship described above on the basis of the various types of the information.

For example, the execution section 22 may determine the degree of the change in the target positional relationship described above on the basis of information on an setting operation by the rider of the lean vehicle 1. The setting operation is an operation to set the degree of the change in the above target positional relationship by the rider of the lean vehicle 1, and is performed by using the input device 13, for example. In other words, the rider of the lean vehicle 1 may be able to set the degree of the change in the target positional relationship described above.

For example, the execution section 22 may determine the degree of the change in the target positional relationship described above on the basis of the posture information of the lean vehicle 1. As described above, the posture information may include the lean angle information of the lean vehicle 1, may include the lateral acceleration information of the lean vehicle 1, or may include the steering angle information of the lean vehicle 1. For example, in the case where the lean angle, the lateral acceleration, or the steering angle of the lean vehicle 1 is large, the execution section 22 may increase the change amount of the target inter-vehicle distance or the change amount of the target passing time difference to be larger than that when the lean angle, the lateral acceleration, or the steering angle of the lean vehicle 1 is small. The execution section 22 may change the change amount of the target inter-vehicle distance or the change amount of the target passing time difference in a continuous or stepwise manner according to the lean angle, the lateral acceleration, or the steering angle of the lean vehicle 1.

The execution section 22 may determine the degree of the change in the target positional relationship described above on the basis of information on the setting operation by the rider and information other than the posture information of the lean vehicle 1. For example, the execution section 22 may determine the degree of the change in the target positional relationship described above on the basis of information on a characteristic of the preceding vehicle (in the above example, the other vehicle 2) as the adjustment target of the positional relationship. The above information on the characteristic can include any of various types of information such as on a model of the preceding vehicle, whether the preceding vehicle is a truck, and whether the preceding vehicle is a motorcycle.

The execution section 22 may determine the degree of the change in the target positional relationship described above on the basis of plural types of the information. For example, the execution section 22 may determine the degree of the change in the target positional relationship described above on the basis of both of the information on the setting operation by the rider and the posture information of the lean vehicle 1.

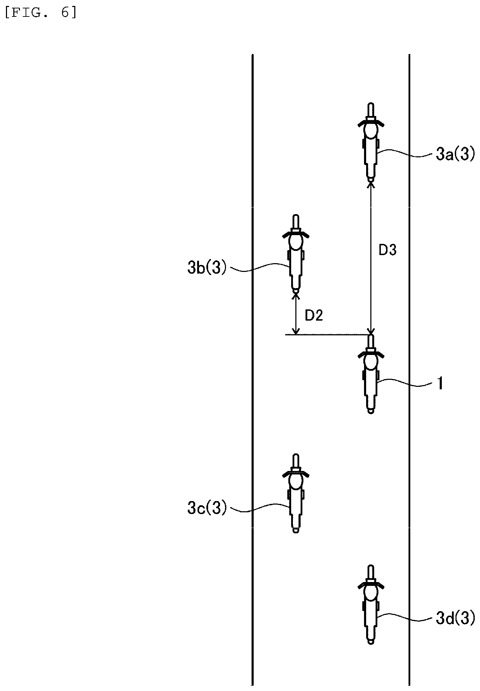

Next, a description will be made on the second processing with reference to Fig. 6 to Fig. 8.

Fig. 6 is a view illustrating a situation where a group including the lean vehicle 1 travels in a group. In the group travel, the group that is made up of the plural lean vehicles including the own vehicle 1 travels in plural vehicle lines. Fig. 6 illustrates some other vehicles 3a, 3b, 3c, 3d of other vehicles 3 (that is, the lean vehicles other than the own vehicle 1 in the group) constituting the group. The number of the lean vehicles that belong to each of the vehicle lines may be plural or one.

As illustrated in Fig. 6, in the group travel, the plural lean vehicles travel in two vehicle lines that are a left vehicle line and a right vehicle line in the same lane. In the example illustrated in Fig. 6, the other vehicle 3b and the other vehicle 3c constitute the left vehicle line. The other vehicle 3b and the other vehicle 3c are aligned in this order from the front. Meanwhile, the other vehicle 3a, the own vehicle 1, and the other vehicle 3d constitute the right vehicle line. The other vehicle 3a, the own vehicle 1, and the other vehicle 3d are aligned in this order from the front in a front-rear direction.

In addition, as illustrated in Fig. 6, in the group travel, the plural lean vehicles travel such that the lean vehicles constituting the left vehicle line and the lean vehicles constituting the right vehicle line are alternately arranged in the front-rear direction (that is, in a zigzag arrangement). In the example illustrated in Fig. 6, the other vehicle 3a in the right vehicle line, the other vehicle 3b in the left vehicle line, the own vehicle 1 in the right vehicle line, the other vehicle 3c in the left vehicle line, and the other vehicle 3d in the right vehicle line are arranged in this order from the front.

As described above, in the group travel made by the plural lean vehicles, the plural lean vehicles travel in the zigzag arrangement. Accordingly, compared to a case where the plural lean vehicles travel in one vehicle line, it is possible to reduce a distance in the front-rear direction between two each of the vehicles. Thus, it is possible to suppress the group from being divided due to a traffic light.

In the example illustrated in Fig. 6, for example, the other vehicle 3b, which belongs to the different vehicle line from the vehicle line to which the own vehicle 1 belongs in the group travel, is set as the preceding vehicle as the adjustment target of the positional relationship in the adaptive cruise control. Then, during the adaptive cruise control, the execution section 22 controls the speed of the lean vehicle 1 such that an inter-vehicle distance D2 between the lean vehicle 1 and the other vehicle 3b is maintained at the target inter-vehicle distance. In this way, a positional relationship between the lean vehicle 1 and the other vehicle 3b is adjusted to such a target positional relationship that the inter-vehicle distance D2 is the target inter-vehicle distance.

Hereinafter, a description will mainly be made on an example in which the other vehicle 3b is set as the preceding vehicle that is the adjustment target of the positional relationship in the adaptive cruise control. However, as will be described below, the other vehicle 3a, which belongs to the same vehicle line as the vehicle line to which the own vehicle 1 belongs, may be set as the preceding vehicle as the adjustment target of the positional relationship in the adaptive cruise control.

By the way, in the example illustrated in Fig. 6, the lean vehicle 1 travels straight. However, the lean vehicle 1 may also corner. When the lean vehicle 1 is cornering, the arrangement of the plural lean vehicles constituting the group is changed from the zigzag arrangement to an arrangement close to a linear arrangement. In other words, the left vehicle line and the right vehicle line approach each other in a lane width direction. Furthermore, in the case where the vehicle that belongs to the group is set as the preceding vehicle that is the adjustment target of the positional relationship, the target inter-vehicle distance therefrom can be set to a smaller value than that in the case where a vehicle that does not belong to the group is set as the preceding vehicle that is the adjustment target of the positional relationship. Thus, when the left vehicle line and the right vehicle line approach each other in the lane width direction, there is a possibility that the lean vehicle 1 and the other vehicle 3b approach each other excessively, which compromises safety. Such a problem is solved by the second processing.

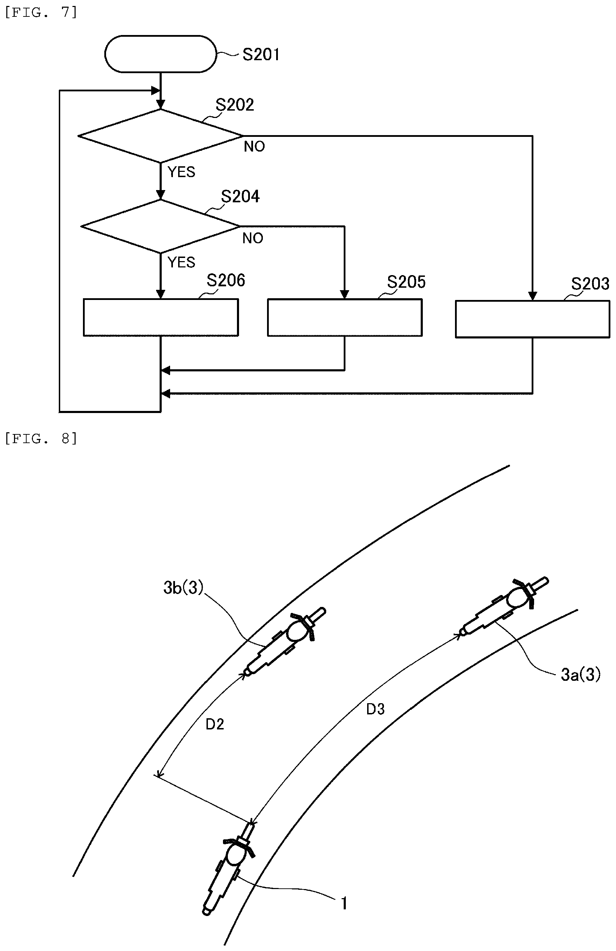

Fig. 7 is a flowchart illustrating an example of a second processing procedure that is executed by the controller 20. Step S201 in Fig. 7 corresponds to initiation of the control flow illustrated in Fig. 7.

Hereinafter, a description will be made on the example in which the rider of the lean vehicle 1 can select a group travel mode as a mode of the adaptive cruise control. When the group travel mode is selected, the execution section 22 executes the group travel mode. In the adaptive cruise control, the group travel mode is a mode that is particularly suited for the group travel. For example, when the group travel mode is being executed, the reference distance for the target inter-vehicle distance is set to a smaller value than that when the adaptive cruise control is being executed but the group travel mode is not executed.

When the control flow illustrated in Fig. 7 is initiated, in step S202, the determination section 23 determines whether the lean vehicle 1 is cornering. The processing in step S202 in Fig. 7 is the same as the processing in step S102 in Fig. 4.

If it is determined that the lean vehicle 1 is not cornering (step S202/NO), the processing proceeds to step S203. In step S203, the execution section 22 sets the target inter-vehicle distance to the reference distance, and the processing returns to step S202. On the other hand, if it is determined that the lean vehicle 1 is cornering (step S202/YES), the processing proceeds to step S204. In step S204, the execution section 22 determines whether the group travel mode is currently executed.

If it is determined that the group travel mode is not currently executed (step S204/NO), the processing proceeds to step S205. In step S205, the execution section 22 sets the target inter-vehicle distance to a shorter distance than the reference distance. On the other hand, if it is determined that the group travel mode is currently executed (step S204/YES), the processing proceeds to step S206. In step S206, the execution section 22 sets the target inter-vehicle distance to a longer distance than the reference distance. After step S205 or step S206, the processing returns to step S202.

Fig. 8 is a view illustrating a situation where the lean vehicle 1 is cornering while traveling in the group. In the second processing, in the case where the own vehicle 1 is cornering as illustrated in Fig. 8, the execution section 22 sets the target inter-vehicle distance, which corresponds to the inter-vehicle distance D2 between the own vehicle 1 and the other vehicle 3b, to be longer than that when the own vehicle 1 is not cornering. In this way, in the case where the own vehicle 1 is cornering, the inter-vehicle distance D2 between the own vehicle 1 and the other vehicle 3b becomes longer than that when the own vehicle 1 is not cornering. Just as described, in the second processing, in the case where the own vehicle 1 is cornering, the execution section 22 changes the target positional relationship with the other vehicle 3b in the manner to set the inter-vehicle distance D2 between the own vehicle 1 and the other vehicle 3b to be longer than that when the own vehicle 1 is not cornering. As a result, it is possible to suppress the excessive approach of the own vehicle 1 and the other vehicle 3b when the left vehicle line and the right vehicle line approach each other in the lane width direction. Thus, it is possible to improve the safety.

Here, in the case where the own vehicle 1 is cornering, the execution section 22 may set the target passing time difference, which corresponds to the passing time difference between the own vehicle 1 and the other vehicle 3b, to be longer than that when the own vehicle 1 is not cornering. Also in this case, in the case where the own vehicle 1 is cornering, the target positional relationship with the other vehicle 3b is changed in the manner to set the inter-vehicle distance D2 between the own vehicle 1 and the other vehicle 3b to be longer than that when the own vehicle 1 is not cornering.

Also, in the second processing, similar to the first processing, the degree of the change in the target positional relationship (for example, the change amount of the target inter-vehicle distance or the change amount of the target passing time difference) between the case where the lean vehicle 1 is cornering and the case where the lean vehicle 1 is not cornering may be set in advance to be constant, or may be changed on the basis of any of the various types of the information (for example, the information on the setting operation by the rider, the posture information of the lean vehicle 1, or the like).

By the way, as described above, the other vehicle 3a, which belongs to the same vehicle line as the vehicle line to which the own vehicle 1 belongs, may be set as the preceding vehicle as the adjustment target of the positional relationship in the adaptive cruise control. In such a case, in the case where the own vehicle 1 is cornering as illustrated in Fig. 8, the execution section 22 sets the target inter-vehicle distance, which corresponds to an inter-vehicle distance D3 between the own vehicle 1 and the other vehicle 3a, to be longer than that when the own vehicle 1 is not cornering. In this way, in the case where the own vehicle 1 is cornering, the inter-vehicle distance D3 between the own vehicle 1 and the other vehicle 3a becomes longer than that when the own vehicle 1 is not cornering. Just as described, in the case where the own vehicle 1 is cornering, the execution section 22 may change the target positional relationship with the other vehicle 3a in the manner to set the inter-vehicle distance D3 between the own vehicle 1 and the other vehicle 3a to be longer than that when the own vehicle 1 is not cornering. Also in such a case, similar to the above example, when the left vehicle line and the right vehicle line approach each other in the lane width direction, such an enough space is formed between the own vehicle 1 and the other vehicle 3a that the other vehicle 3b can fit in. As a result, it is possible to suppress the excessive approach between the own vehicle 1 and the other vehicle 3b and thus to improve the safety.

Here, in the case where the own vehicle 1 is cornering, the execution section 22 may set the target passing time difference, which corresponds to a passing time difference between the own vehicle 1 and the other vehicle 3a, to be longer than that when the own vehicle 1 is not cornering. Also in this case, in the case where the own vehicle 1 is cornering, the target positional relationship with the other vehicle 3a is changed in the manner to set the inter-vehicle distance D3 between the own vehicle 1 and the other vehicle 3a to be longer than that when the own vehicle 1 is not cornering.

In the above-described flowchart in Fig. 7, if it is determined that the group travel mode is currently executed (step S204/YES), the processing in step S206 is executed. However, the execution condition to execute the processing in step S206 is not limited to this example. The above execution condition only needs to be a condition with which it is possible to determine that the group including the own vehicle 1 and the other vehicles 3 travels in the group. For example, the above execution condition may be such a condition that it is determined that the own vehicle 1 and the other vehicles 3 travel in the zigzag arrangement, or the like. For example, the controller 20 acquires information on the positional relationship among the own vehicle 1 and the other vehicles 3 via the wireless communication with the other vehicles 3 or the infrastructure facility, and can thereby determine whether the own vehicle 1 and the other vehicles 3 travel in the zigzag arrangement by using such information. Alternatively, the controller 20 may determine whether the group including the own vehicle 1 and the other vehicles 3 travels in the group, for example, on the basis of the information on the setting operation by the rider of the lean vehicle 1.

### <Effects of Controller>

A description will be made on effects of the controller 20 according to the embodiment of the invention.

The controller 20 includes the execution section 22 that executes the positional relationship adjustment operation to adjust the positional relationship between the lean vehicle 1 and the preceding vehicle (for example, the other vehicle 2, 3a, or 3b) located in front of the lean vehicle 1 to the target positional relationship. The controller 20 further includes the determination section 23 that determines whether the lean vehicle 1 is cornering. Then, the execution section 22 changes the target positional relationship according to whether the lean vehicle 1 is cornering. In this way, in the case where the lean vehicle 1 is cornering, it is possible to adjust the positional relationship between the lean vehicle 1 and the preceding vehicle by taking a fact that the lean vehicle 1 is cornering into consideration. Thus, it is possible to appropriately adjust the positional relationship between the lean vehicle 1 and the preceding vehicle.

Preferably, in the controller 20, in the case where the lean vehicle 1 is cornering, the execution section 22 changes the target positional relationship in the manner to set the inter-vehicle distance (the inter-vehicular distance D1 in the examples illustrated in Fig. 3 and Fig. 5) between the lean vehicle 1 and the preceding vehicle (the other vehicle 2 in the examples illustrated in Fig. 3 and Fig. 5) to be shorter than that when the lean vehicle 1 is not cornering. As a result, it is possible to suppress the compromise of the driving feeling due to the loss of sight of the preceding vehicle by the rider of the lean vehicle 1 and/or to suppress the preceding vehicle from moving out of the detection range of the surrounding environment sensor 14 in the case where the lean vehicle 1 is cornering.

Preferably, in the case where the lean vehicle 1 (that is, the own vehicle 1) is cornering, in the controller 20, the execution section 22 changes the target positional relationship with the preceding vehicle (the other vehicle 3b in the examples illustrated in Fig. 6 and Fig. 8) in the manner to set the inter-vehicle distance (the inter-vehicle distance D2 in the examples illustrated in Fig. 6 and Fig. 8) between the own vehicle 1 and the preceding vehicle to be longer than that when the own vehicle 1 is not cornering, and the preceding vehicle is the other vehicle that belongs to the different vehicle line from the vehicle line to which the own vehicle 1 belongs in the group travel in which the group made up of the plural lean vehicles travels in the plural vehicle lines. As a result, in the case where the own vehicle 1 is cornering, it is possible to suppress the excessive approach of the own vehicle 1 and the other vehicle 3b, which belongs to the different vehicle line from the vehicle line to which the own vehicle 1 belongs, when the left vehicle line and the right vehicle line approach each other in the lane width direction. Thus, it is possible to improve the safety.

Preferably, in the case where the lean vehicle 1 (that is, the own vehicle 1) is cornering, in the controller 20, the execution section 22 changes the target positional relationship with the preceding vehicle (the other vehicle 3a in the examples illustrated in Fig. 6 and Fig. 8) in the manner to set the inter-vehicle distance (the inter-vehicle distance D3 in the examples illustrated in Fig. 6 and Fig. 8) between the own vehicle 1 and the preceding vehicle to be longer than that when the own vehicle 1 is not cornering, and the preceding vehicle is the other vehicle that belongs to the same vehicle line as the vehicle line to which the own vehicle 1 belongs in the group travel in which the group made up of the plural lean vehicles travels in the plural vehicle lines. As a result, in the case where the own vehicle 1 is cornering, it is possible to suppress the excessive approach of the own vehicle 1 and the other vehicle 3b, which belongs to the different vehicle line from the vehicle line to which the own vehicle 1 belongs, when the left vehicle line and the right vehicle line approach each other in the lane width direction. Thus, it is possible to improve the safety.

Preferably, in the controller 20, the execution section 22 determines the degree of the change in the target positional relationship between the case where the lean vehicle 1 is cornering and the case where the lean vehicle 1 is not cornering on the basis of the information on the setting operation by the rider of the lean vehicle 1. In this way, in the case where the lean vehicle 1 is cornering, it is possible to adjust the positional relationship between the lean vehicle 1 and the preceding vehicle by taking the rider's intention into consideration. Thus, for example, it is possible to further effectively suppress the compromise of the driving feeling.

Preferably, in the controller 20, the execution section 22 determines the degree of the change in the target positional relationship between the case where the lean vehicle 1 is cornering and the case where the lean vehicle 1 is not cornering on the basis of the posture information of the lean vehicle 1. In this way, in the case where the lean vehicle 1 is cornering, it is possible to further appropriately adjust the positional relationship between the lean vehicle 1 and the preceding vehicle according to a condition of a curved road on which the lean vehicle 1 travels.

Preferably, in the controller 20, the determination section 23 determines whether the lean vehicle 1 is cornering on the basis of the posture information of the lean vehicle 1. In this way, it is possible to appropriately determine whether the lean vehicle 1 is cornering.

Preferably, in the controller 20, the posture information includes the lean angle information of the lean vehicle 1. In this way, it is possible to further appropriately determine whether the lean vehicle 1 is cornering.

Preferably, in the controller 20, the posture information includes the lateral acceleration information of the lean vehicle 1. In this way, it is possible to further appropriately determine whether the lean vehicle 1 is cornering.

Preferably, in the controller 20, the posture information includes the yaw angular velocity information of the lean vehicle 1. In this way, it is possible to further appropriately determine whether the lean vehicle 1 is cornering.

Preferably, in the controller 20, the posture information includes the steering angle information of the lean vehicle 1. In this way, it is possible to further appropriately determine whether the lean vehicle 1 is cornering.

The invention is not limited to the embodiment that has been described. For example, only a part of the embodiment may be implemented.

### Reference Signs List

- 1:: Lean vehicle (own vehicle)
- 2:: Other vehicle (preceding vehicle)
- 3:: Other vehicle
- 3a:: Other vehicle (preceding vehicle)
- 3b:: Other vehicle (preceding vehicle)
- 3c:: Other vehicle
- 3d:: Other vehicle
- 11:: Engine
- 12:: Hydraulic pressure control unit
- 13:: Input device
- 14:: Surrounding environment sensor
- 15:: IMU
- 16:: Front-wheel rotational frequency sensor
- 17:: Rear-wheel rotational frequency sensor
- 20:: Controller
- 21:: Acquisition section
- 22:: Execution section
- 23:: Determination section
- D1:: Inter-vehicle distance
- D2:: Inter-vehicle distance
- D3:: Inter-vehicle distance

## Claims

1. A controller (20) that controls behavior of a lean vehicle (1), the controller comprising:
an execution section (22) that executes positional relationship adjustment operation to adjust a positional relationship between the lean vehicle (1) and a preceding vehicle (2, 3a, 3b) located in front of the lean vehicle (1) to a target positional relationship, and further comprising:
a determination section (23) that determines whether the lean vehicle (1) is cornering, wherein
the execution section (22) changes the target positional relationship according to whether the lean vehicle (1) is cornering.

2. The controller according to claim 1, wherein
in the case where the lean vehicle (1) is cornering, the execution section (22) changes the target positional relationship in a manner to set an inter-vehicle distance between the lean vehicle (1) and the preceding vehicle (2) to be shorter than that when the lean vehicle (1) is not cornering.

3. The controller according to claim 1, wherein
in the case where own vehicle (1) is cornering, the execution section (22) changes the target positional relationship with the preceding vehicle (3b) in a manner to set an inter-vehicle distance between the own vehicle (1) and the preceding vehicle (3b) to be longer than that when the own vehicle (1) is not cornering, the preceding vehicle (3b) being another vehicle that belongs to a different vehicle line from a vehicle line to which the own vehicle (1) belongs in group travel in which a group made up of plural lean vehicles travels in plural vehicle lines.

4. The controller according to claim 1, wherein
in the case where own vehicle (1) is cornering, the execution section (22) changes the target positional relationship with the preceding vehicle (3a) in a manner to set an inter-vehicle distance between the own vehicle (1) and the preceding vehicle (3a) to be longer than that when the own vehicle (1) is not cornering, the preceding vehicle (3a) being another vehicle that belongs to the same vehicle line as a vehicle line to which the own vehicle (1) belongs in group travel in which a group made up of plural lean vehicles travels in plural vehicle lines.

5. The controller according to claim 1, wherein
the execution section (22) determines a degree of a change in the target positional relationship between a case where the lean vehicle (1) is cornering and a case where the lean vehicle (1) is not cornering on the basis of information on a setting operation by a rider of the lean vehicle (1).

6. The controller according to claim 1, wherein
the execution section (22) determines a degree of a change in the target positional relationship between a case where the lean vehicle (1) is cornering and a case where the lean vehicle (1) is not cornering on the basis of posture information of the lean vehicle (1).

7. The controller according to claim 1, wherein
the determination section (23) determines whether the lean vehicle (1) is cornering on the basis of posture information of the lean vehicle (1).

8. The controller according to claim 6 or 7, wherein
the posture information includes lean angle information of the lean vehicle (1).

9. The controller according to claim 6 or 7, wherein
the posture information includes lateral acceleration information of the lean vehicle (1).

10. The controller according to claim 6 or 7, wherein
the posture information includes yaw angular velocity information of the lean vehicle (1).

11. The controller according to claim 6 or 7, wherein
the posture information includes steering angle information of the lean vehicle (1).

12. A control method for controlling behavior of a lean vehicle (1), the control method comprising:
executing positional relationship adjustment operation by an execution section (22) of a controller (20), the positional relationship adjustment operation being operation to adjust a positional relationship between the lean vehicle (1) and a preceding vehicle (2, 3a, 3b) located in front of the lean vehicle (1) to a target positional relationship, and further comprising:
determining whether the lean vehicle (1) is cornering by a determination section (23) of the controller (20), wherein
the execution section (22) changes the target positional relationship according to whether the lean vehicle (1) is cornering.
